**Europäisches Patentamt**

**European Patent Office**

**Office européen des brevets**

(19)

(11) Veröffentlichungsnummer : **0 427 028 B1**

(12) **EUROPÄISCHE PATENTSCHRIFT**

(45) Veröffentlichungstag der Patentschrift :
**01.09.93 Patentblatt 93/35**

(51) Int. Cl.⁵ : **C08G 18/66,** C08G 18/08,
C08G 18/42, C08G 18/12,
C08G 18/75, C09D 175/06,
B05D 7/16

(21) Anmeldenummer : **90120074.1**

(22) Anmeldetag : **19.10.90**

(54) **In Wasser dispergierbare Bindemittelkombinationen, ein Verfahren zur Herstellung eines Einbrennfüllers und dessen Verwendung.**

Die Akte enthält technische Angaben, die nach
dem Eingang der Anmeldung eingereicht
wurden und die nicht in dieser Patentschrift
enthalten sind.

(30) Priorität : **01.11.89 DE 3936288**

(43) Veröffentlichungstag der Anmeldung :
**15.05.91 Patentblatt 91/20**

(45) Bekanntmachung des Hinweises auf die
Patenterteilung :
**01.09.93 Patentblatt 93/35**

(84) Benannte Vertragsstaaten :
**AT BE CH DE ES FR GB IT LI NL SE**

(56) Entgegenhaltungen :
**EP-A- 0 022 518**
**EP-A- 0 140 323**

(56) Entgegenhaltungen :
**EP-A- 0 142 701**
**EP-A- 0 157 291**
**EP-A- 0 355 682**
**EP-A- 0 379 007**
**DE-A- 3 805 629**
**US-A- 4 791 168**

(73) Patentinhaber : **BAYER AG**
**D-51368 Leverkusen (DE)**

(72) Erfinder : **Blum, Harald, Dr.**
**Auf dem Westkamp 1**
**W-4175 Wachtendonk (DE)**
Erfinder : **Meixner, Jürgen, Dr.**
**Josef-Brocker-Dyk 56**
**W-4150 Krefeld 1 (DE)**
Erfinder : **Pedain, Josef, Dr.**
**Haferkamp 6**
**W-5000 Köln 80 (DE)**
Erfinder : **Burgdörfer, Hans-Heribert, Dr.**
**Goffineweg 49**
**W-5000 Köln 80 (DE)**

## Beschreibung

Die Erfindung betrifft in Wasser dispergierbare Bindemittelkombinationen zur Herstellung eines aus wäßriger Phase zu verarbeitenden Einbrennfüllers auf Basis von ausgewählten, in Wasser dispergierbaren, urethanmodifizierten Polyesterharzen und Vernetzern, ein Verfahren zur Herstellung eines derartigen Einbrennfüllers und dessen Verwendung zur Herstellung von steinschlagfesten Beschichtungen auf Kraftfahrzeugteilen.

Die Herstellung von steinschlagfesten Überzügen ist insbesondere für die Automobillackierung von großem Interesse. In der Praxis werden hierfür bislang überwiegend lösungsmittelhaltige Beschichtungsmittel eingesetzt. So wird beispielsweise in der DE-OS 3 337 394 ein Steinschlagschutzlack auf Basis von Polyestern mit blockierten Isocyanaten beschrieben, der lackübliche organische Lösemittel enthält. Aus wirtschaftlichen Gründen und zur Verringerung der Umweltbelastung ist man jedoch immer mehr bemüht, organische Lösemittel in Lacken so weit wie möglich zu vermeiden.

Ein moderner Füller für die Automobillackierung muß eine Reihe von Anforderungen erfüllen. Er muß einen guten Verlauf aufweisen, um Unebenheiten im Untergrund ausgleichen zu können, er muß sehr gute Haftungswerte sowohl zum Untergrund als auch zum Decklack aufweisen, die auch beim Überbrennen erhalten bleiben müssen. Der Füller muß steinschlagfest sein, sowie gute Ergebnisse im Schwitzwasser-/Salzsprühtest aufweisen, um die Korrosionsschutzwirkung des Lackaufbaus zu unterstützen. Er muß lösemittelfest sein, damit er vom Decklack nicht angelöst wird. Darüber hinaus muß er Vergilbungsbeständigkeit aufweisen und die gute Filmoptik des Decklackes unterstützen.

In der EP-A-330 139 wird ein Verfahren zur Erzielung steinschlagfester Überzüge beschrieben, das darin besteht, daß zwei Schichten, eine Steinschlagzwischengrundierung und ein Hydrofüller, appliziert und naß-in-naß eingebrannt werden. Dieses Verfahren erfordert die zusätzliche Applikation einer Lackschicht und ist deshalb sehr aufwendig und zeitintensiv, da es günstiger ist, alle gestellten Anforderungen mit einer einzigen Füllerschicht zu erfüllen.

Die in EP-A-330 139 eingesetzten carboxylfunktionellen Polyesterbindemittel weisen darüber hinaus aufgrund einer gewissen Verseifungsanfälligkeit nur eine begrenzte Lagerstabilität auf.

Die EP-A-278 394 beschreibt wasserverdünnbare Füller auf Basis von Polyetherurethanen, die unter Mitverwendung von oleochemischen Polyolen hergestellt worden sind. Die aus diesen Ausgangsmaterialien hergestellten und durch Mitverwendung von anionischen Dihydroxy- und/oder Diaminoverbindungen hydrophil modifizierten Polyurethane werden insbesondere als Zusatzmittel für wäßrige Alkydharzemulsionen verwendet. Um gute Filmeigenschaften sicherzustellen, müssen daher die Polyurethane mit anderen Bindemitteln kombiniert werden.

Nach dem in der EP-A-278 394 beschriebenen bevorzugten Herstellungsverfahren werden zunächst Polyetherpolyole und oleochemische Polyole mit einem Diisocyanat zu einem isocyanatfunktionellen Prepolymer und dieses dann mit der ionische Gruppen enthaltende Dihydroxyverbindung umgesetzt. Dieses Herstellungsverfahren hat den Nachteil, daß mindestens 2, in allen Beispielen sogar 3, verschiedene Polyolvorstufen benötigt werden, um das NCO-funktionelle Prepolymer herzustellen. Darüber hinaus können bei den beschriebenen Herstellverfahren nur tertiäre, nicht NCO-reaktive Amine wie z.B. Triethylamin und N-Methylmorpholin eingesetzt werden. In der EP-A-278 394 wird desweiteren festgestellt, daß bei Verwendung nur eines Polyols anstelle der erfindungsgemäßen Polyolkombination Produkte mit erheblich schlechteren Filmeigenschaften erhalten werden.

Die EP-A-0 157 291 beschreibt wäßrige, für die Herstellung von hochpigmentierten Einbrennlacken geeignete Bindemittel-Dispersionen auf Basis von Polyester- oder Alkydharzen, die einkondensierte Monohydroxy- und/oder 2,2-Di(hydroxymethyl)carbonsäuren enthalten.

Aufgabe der Erfindung war es, ein Einbrennfüllerbindemittel zur Verfügung zu stellen, das bei einschichtiger Füllerapplikation alle gestellten Anforderungen erfüllt, das einfach herstellbar ist, sowie eine lange Lagerstabilität aufweist.

Überraschenderweise konnte diese Aufgabe durch die Bereitstellung der nachstehend näher beschriebenen Bindemittelkombination bzw. des nachstehend näher beschriebenen Verfahrens zur Herstellung eines Einbrennfüllers gelöst werden.

Gegenstand der Erfindung sind in Wasser dispergierbare Bindemittelkombinationen zur Herstellung eines aus wäßriger Phase zu verarbeitenden Einbrennfüllers, bestehend aus

a) 65 - 95 Gew.-% eines Carboxylatgruppen enthaltenden, urethanmodifizierten Polyesterharzes,

b) 5 - 35 Gew.-% Aminoplastharz und/oder blockiertes Polyisocyanat als Vernetzerharz,

c) 0 - 2 Gew.-% eines Emulgators,

dadurch gekennzeichnet, daß die Komponente a) eine Säurezahl von 15 - 36, eine Hydroxylzahl von mindestens 40 und ein Molekulargewicht $M_w$ von 5.000 - 50.000 aufweist und durch Umsetzung von

EP 0 427 028 B1

a₁) 72 - 80 Gew.-% eines Polyesterpolyols mit einer Hydroxylzahl von 130 - 200 und einer Säurezahl von 1 - 5, welches durch Umsetzung von

$a_{1,1}$) 2 - 11 Gew.-% einer Monocarbonsäure-Komponente, bestehend aus mindestens einer aliphatischen Monocarbonsäure des Molekulargewichtsbereichs 122 - 340,

$a_{1,2}$) 17 - 27 Gew.-% einer Dicarbonsäure-Komponente, bestehend aus mindestens einer aliphatischen Dicarbonsäure des Molekulargewichtsbereichs 116 - 600,

$a_{1,3}$) 20 - 30 Gew.-% einer Säure- bzw. Anhydrid-Komponente, bestehend aus mindestens einer aromatischen oder cycloaliphatischen Dicarbonsäure des Molekulargewichtsbereichs 166 - 172 und/oder mindestens einem Anhydrid einer derartigen Säure,

$a_{1,4}$) 27 - 41 Gew.-% einer Diol-Komponente, bestehend aus mindestens einem (cyclo)aliphatischen Diol des Molekulargewichtsbereichs 62 - 400 mit der Maßgabe, daß mindestens 50 Gew.-% dieser Komponente diprimäre Diole mit 5 - 8 Kohlenstoffatomen darstellen, und

$a_{1,5}$) 13 - 21 Gew.-% einer Polyol-Komponente, bestehend aus mindestens einem drei- oder vierwertigen Alkohol des Molekulargewichtsbereichs 92 - 300

hergestellt worden ist, und

$a_2$) 4 - 7 Gew.-% einer 2,2-Bis(hydroxymethyl)alkancarbonsäure oder einer dieser Säuremenge entsprechenden Menge eines t-Aminsalzes einer solchen Säure mit

$a_3$) 15 - 24 Gew.-% einer Diisocyanat-Komponente, bestehend aus mindestens einem cycloaliphatischen Diisocyanat des Molekulargewichtsbereichs 166 - 294

und gegebenenfalls anschließende Neutralisation zumindest eines Teils der in dem Umsetzungsprodukt vorliegenden Carboxylgruppen mit Ammoniak oder einem organischen Amin hergestellt worden ist, wobei sich die Prozentsätze bezüglich der Komponenten a) bis c), bezüglich der Komponenten $a_1$) bis $a_3$) und bezüglich der Komponenten $a_{1,1}$) bis $a_{1,5}$) jeweils zu 100 ergänzen.

Gegenstand der Erfindung ist auch ein Verfahren zur Herstellung eines wäßrigen Einbrennfüllers zur Herstellung von steinschlagfesten Beschichtungen, dadurch gekennzeichnet, daß man in einer ersten Stufe ein Polyesterpolyol $a_1$) mit einer Hydroxylzahl von 130 - 200 und einer Säurezahl von 1 - 5 durch an sich bekannten Umsetzung von

$a_{1,1}$) 2 - 11 Gew.% einer Monocarbonsäure-Komponente, bestehend aus mindestens einer aliphatischen Monocarbonsäure des Molekulargewichtsbereichs 122 - 340,

$a_{1,2}$) 17 - 27 Gew.-% einer Dicarbonsäure-Komponente, bestehend aus mindestens einer aliphatischen Dicarbonsäure des Molekulargewichtsbereichs 116 - 600,

$a_{1,3}$) 20 - 30 Gew.-% einer Säure- bzw. Anhydrid-Komponente, bestehend aus mindestens einer aromatischen oder cycloaliphatischen Dicarbonsäure des Molekulargewichtsbereichs 166 bis 172 und/oder mindestens einem Anhydrid einer derartigen Säure,

$a_{1,4}$) 27 - 41 Gew.-% einer Diol-Komponente, bestehend aus mindestens einem (cyclo)aliphatischen Diol des Molekulargewichtsbereichs 62 - 400, mit der Maßgabe, daß mindestens 50 Gew.-% dieser Komponente aus einem diprimären Diol mit 5 - 8 Kohlenstoffatomen besteht, und

$a_{1,5}$) 13 - 21 Gew.-% einer Polyol-Komponente, bestehend aus mindestens einem drei- oder vierwertigen Alkohol des Molekulargewichtsbereichs 92 - 300

herstellt, wobei sich die genannten Prozentsätze zu 100 ergänzen, und anschließend

in einer zweiten Stufe 72 - 80 Gew.-% des Polyesters $a_1$) mit $a_2$) 4 - 7 Gew.-% einer 2,2-Bis(hydroxymethyl)alkancarbonsäure oder einer dieser Säuremenge entsprechenden Menge eines t-Aminsalzes einer derartigen Säure und $a_3$) 15 - 24 Gew.-% eines cycloaliphatischen Diisocyanats des Molekulargewichtsbereichs 166 - 294 in Gegenwart eines inerten Lösungsmittels bei 50 -140°C zu einem in organischer Lösung vorliegenden, urethanmodifizierten Polyesterharz a) des Molekulargewichtsbereichs $M_w$ 5.000 - 50.000, einer Säurezahl von 15 - 36 und einer Hydroxylzahl von mindestens 40 umsetzt, wobei sich auch hier die Prozentsätze zu 100 ergänzen, und anschließend

in einer dritten Stufe, gegebenenfalls nach Zugabe von Emulgatoren c) unter Einhaltung eines Gewichtsverhältnisses von urethanmodifiziertem Polyesterharz a) zu Emulgator c) von 65 : 2 bis 95 : 0 die organische Lösung mit Wasser vermischt, die Vernetzerharzkomponente b) unter Einhaltung eines Gewichtsverhältnisses der Komponenten a) und b) von 65 : 35 bis 95 : 5 und gegebenenfalls weitere Hilfs- und Zusatzmittel zusetzt, wobei die in der Komponente a) gegebenenfalls noch vorliegenden Carboxylgruppen vor, während oder im Anschluß an die Durchführung der dritten Stufe gegebenenfalls mit Ammoniak oder einem Amin zumindest teilweise in Carboxylatgruppe überführt werden.

Gegenstand der Erfindung ist schließlich auch die Verwendung des nach diesem Verfahren erhaltenen Einbrennfüllers zur Herstellung von steinschlagfesten Überzügen auf Kraftfahrzeugen oder Kraftfahrzeugteilen.

Die erfindungsgemäßen Bindemittelkombinationen bestehen aus den oben genannten Einzelkomponen-

3

ten a), b) und gegebenenfalls c) in den oben angegebenen Mengenverhältnissen. Vorzugsweise bestehen die erfindungsgemäßen Bindemittelkombinationen aus 75 - 90 Gew.-% der Komponente a), 10 - 25 Gew.-% der Komponenten b) und 0 - 1 Gew.-% der Komponente c).

Bei der Komponente a) handelt es sich um ein chemisch eingebaute Carboxylatgruppen enthaltendes, urethanmodifiziertes Polyesterharz eines nach der Methode der Gelpermeationschromatographie unter Verwendung von Polyestern als Standard ermittelbaren, als Gewichtsmittel $M_w$ bestimmten Molekulargewichts von 5.000 - 50.000, vorzugsweise 7.500 - 30.000, welches eine Säurezahl von 15 - 36, vorzugsweise 20 - 29,9, und eine Hydroxylzahl von mindestens 40, vorzugsweise von 60 - 100, aufweist. Der Gehalt des Harzes an Urethangruppen -NH-CO-O liegt im allgemeinen bei 6,5 - 10,5 Gew.-%. Die Gegenionen zu den Carboxylatgruppen stellen im allgemeinen Kationen auf Basis von Ammoniak oder auf Basis von organischen, vorzugsweise tertiären Aminen dar. Da bei der Bestimmung der Säurezahlen durch Titration mit Kaliumhydroxid die mit derartigen, vergleichsweise schwachen Basen neutralisierten Carboxylgruppen ebenfalls erfaßt werden, beziehen sich alle Angaben bezüglich der Säurezahlen sowohl auf freie als auch auf die neutralisiert vorliegenden Carboxylgruppen. Im übrigen beziehen sich die Zahlenangeben bezüglich der Hydroxyl- und Säurezahlen stets auf die Menge KOH in "mg", die zur Titration von 1 g Substanz verbraucht wird.

Die Herstellung der urethanmodifizierten Polyesterharze a) erfolgt durch Umsetzung von

$a_1$) 72 - 80, vorzugsweise 73 - 77 Gew.-% eines Polyesterpolyols mit einer Hydroxylzahl von 130 - 200, vorzugsweise 145 - 180, und einer Säurezahl von 1 - 5, vorzugsweise von 1 - 3,5, mit

$a_2$) 4 - 7, vorzugsweise 5 - 6,5 Gew.-% einer 2,2-Bis(hydroxymethyl)alkancarbonsäure oder einer dieser Säuremenge entsprechenden Menge eines t-Aminsalzes einer derartigen Säure und

$a_3$) 15 - 24, vorzugsweise 17 - 22 Gew.-% einer Diisocyanat-Komponente, bestehend aus mindestens einem cycloaliphatischen Diisocyanat des Molekulargewichtsbereichs $M_w$ 166 - 294, vorzugsweise 222 - 294,

wobei sich die genannten Prozentsätze zu 100 ergänzen.

Die Polyesterpolyole $a_1$) ihrerseits stellen das Umsetzungsprodukt von

$a_{1,1}$) 2 - 11 Gew.-%, vorzugsweise 3 - 9,5 Gew.-%, einer Monocarbonsäure-Komponente,

$a_{1,2}$) 17 - 27 Gew.-%, vorzugsweise 20 - 25 Gew.-%, einer aliphatischen Dicarbonsäure-Komponente,

$a_{1,3}$) 20 - 30 Gew.-%, vorzugsweise 22 - 28 Gew.-%, einer cycloaliphatischen bzw. aromatischen Dicarbonsäure- bzw. Dicarbonsäureanhydrid-Komponente,

$a_{1,4}$) 27 - 41 Gew.-%, vorzugsweise 30 - 39 Gew.-%, einer (cyclo)aliphatischen Diol-Komponente und

$a_{1,5}$) 13 - 21 Gew.-%, vorzugsweise 15 - 19 Gew.-%, einer Polyol-Komponente

dar, wobei sich auch hier die genannten Prozentsätze zu 100 ergänzen.

Die Herstellung der Polyesterharze $a_1$) erfolgt durch eine an sich bekannte Umsetzung der genannten Ausgangsmaterialien, wobei diese Umsetzung gegebenenfalls unter Zuhilfenahme von üblichen Veresterungskatalysatoren vorzugsweise nach dem Prinzip eine Schmelz- oder Azeotropkondensation, gegebenenfalls auch unter Anlegen eines Vakuums, bei Temperaturen von 140 bis 220°C unter Wasserabspaltung erfolgt.

Bei der Ausgangskomponente $a_{1,1}$) handelt es sich um eine Monocarbonsäure-Komponente, die zumindest aus einer Monocarbonsäure des Molekulargewichtsbereichs 122 - 340 besteht. Geeignete Monocarbonsäuren sind z.B. gesättigte Fettsäuren wie 2-Ethylhexansäure, Isononansäure, Decansäure, Octadecansäure; Kokosölfettsäure, Sojaölfettsäure, Safflorölfettsäure, Erdnußölfettsäure oder auch Gemische derartiger Monocarbonsäuren.

Bei der Komponente $a_{1,2}$) handelt es sich um eine Dicarbonsäure-Komponente, die zumindest aus einer aliphatischen Dicarbonsäure des Molekulargewichtsbereichs 116 - 600 besteht. Geeignete Dicarbonsäuren $a_{1,2}$) sind z.B. Adipinsäure, Bernsteinsäure, Sebacinsäure, Korksäure, Dimerfettsäure oder Gemische dieser Säuren.

Bei der Komponente $a_{1,3}$) handelt es sich um mindestens eine cycloaliphatische und/oder aromatische Dicarbonsäure des Molekulargewichtsbereichs 166 - 172 und/oder mindestens ein Anhydrid einer derartigen Säure. Geeignet sind z.B. Phthalsäure(anhydrid), Isophthalsäure, Terephthalsäure, Tetrahydrophthalsäure(anhydrid), Hexahydrophthalsäure(anhydrid) oder Gemische dieser Säuren bzw. Anhydride.

Bei der Komponente $a_{1,4}$) handelt es sich um eine aliphatische- bzw. cycloaliphatische Diol-Komponente, die aus mindestens einem zweiwertigen Alkohol des Molekulargewichtsbereichs 62 - 400 besteht, wobei mindestens 50 % der Diol-Komponente aus diprimären Diolen mit 5 - 8 Kohlenstoffatomen bestehen. Geeignete Diole sind z.B. Ethylenglykol, 1,3- und 1,2-Propylenglykol, 1,4-, 1,3- und 2,3-Butandiol, 1,6-Hexandiol, Diethylenglykol, Triethylenglykol, 1,8-Octandiol, hydrierte Bisphenole, 1,4-Cyclohexandiol, 1,4-Cyclohexandimethanol, Neopentylglykol oder Gemische dieser Diole.

Bei der Komponente $a_{1,5}$) handelt es sich um eine höherfunktionelle Polyol-Komponente, die zumindest aus einem drei- oder vierwertigen Alkohol des Molekulargewichtsbereichs 92 - 300 besteht. Geeignete höherfunktionelle Alkohole sind beispielsweise Glycerin, Trimethylolpropan und Pentaerythrit.

Im Falle einer azeotropen Veresterung der Komponenten $a_{1,1}$) bis $a_{1,5}$) wird das Schleppmittel, üblicherweise Isooctan, Xylol, Toluol oder Cyclohexan nach beendeter Reaktion im Vakuum abdestilliert.

Bei der Komponente $a_2$) handelt es sich um mindestens eine 2,2-Bis(hydroxymethyl)alkancarbonsäure mit insgesamt mindestens 5 Kohlenstoffatomen, vorzugsweise um 2,2-Bis(hydroxymethyl)-propionsäure (Dimethylolpropionsäure) oder um ein t-Aminsalz einer solcher Säure.

Bei der Komponente $a_3$) handelt es sich um eine Diisocyanatkomponente, bestehend aus mindestens einem cycloaliphatischen Diisocyanat des Molekulargewichtsbereichs 166 - 294, vorzugsweise 222 - 294. Geeignet sind beispielsweise 1-Isocyanato-3,3,5-trimethyl-5-isocyanatomethyl-cyclohexan (Isophorondiisocyanat, abgekürzt: IPDI) und Perhydro-2,4'- und 4,4'-diphenylmethandiisocyanat.

Zur Herstellung der urethanmodifizierten Polyesterharze a) kann beispielsweise so vorgegangen werden, daß der Polyester $a_1$), die 2,2-Bis(hydroxymethyl)alkancarbonsäure $a_2$) oder deren Salz und das vorzugsweise mitverwendete Lösungsmittel homogenisiert, dann bei 50 - 120°C das Diisocyanat $a_3$) innerhalb eines Zeitraumes von 1 Minute bis zu 2 Stunden zugegeben und das Reaktionsgemisch unter Ausnutzung der exothermen Reaktion solange bei 50 - 140°C gerührt werden, bis ein Harz mit den genannten Kenndaten resultiert.

Die Umsetzung kann in Gegenwart von geeigneten Katalysatoren wie z.B. Dibutylzinnoxid, Dibutylzinndilaurat oder auch tert. Aminen wie Triethylamin durchgeführt werden, die im allgemeinen in Mengen von 0,01 - 2,5 Gew.-%, bezogen auf das Gewicht des gesamten Reaktionsansatzes, zugesetzt werden. Im Falle der Verwendung von tert. Aminen wie beispielsweise von Triethylamin erfolgt gleichzeitig eine zumindest teilweise Neutralisation der vorliegenden Carboxylgruppen.

Die Umsetzung kann in Substanz durchgeführt werden, sie erfolgt jedoch vorzugsweise in Gegenwart von gegenüber Isocyanatgruppen inerten Lösungsmitteln bei Festgehalten von 40 - 90 Gew.-%. Geeignete Lösemittel sind z.B. Dimethyldiglykol, N-Methylpyrrolidon, N-Methylcaprolacton, Ethylglykolacetat, Aceton, Methylethylketon bzw. Gemische dieser Lösemittel mit anderen Lösemitteln wie z.B. n-Butylacetat, Methoxypropylacetat, Xylol, Toluol, Solvent Naphta.

Werden besondere hohe Anforderungen an den Restgehalt organischer Lösemittel gestellt, so kann ein Teil oder auch die Gesamtmenge des Lösemittels vor und/oder während und/oder nach der Neutralisation bzw. dem Dispergieren des Harzes in Wasser destillativ abgetrennt werden.

Nach der Urethanisierungsreaktion können zur Erzielung bestimmter Eigenschaften auch geringe Mengen anderer organischer Lösemittel wie z.B. Ethanol, n-Propanol, iso-Propanol, n-Butanol, iso-Butanol, tert.-Butanol, Pentanol, Hexanol, Octanol, Butylglykol, Ethylglykol, Butyldiglykol, Ethyldiglykol, Methyldiglykol, Methoxypropanol zugesetzt werden.

Die Harze bzw. die Harzlösung wird in Wasser und/oder, falls die zumindest teilweise Neutralisation der Carboxylgruppen nicht bereits früher erfolgte, in einem Gemisch aus Wasser und Neutralisationsmittel dispergiert.

Neutralisationsmittel werden in solchen Mengen eingesetzt, daß 45 - 100, bevorzugt 50 - 80 % der zur Anionenbildung befähigten Gruppen neutralisiert werden.

Geeignete Neutralisationsmittel sind z.B. Ammoniak, Triethylamin, Tripropylamin, Tributylamin, Triethanolamin, Monoethanolamin, N,N-Dimethylethanolamin, N-Methylethanolamin, Diethanolamin, N-Methyldiethanolamin, Diisopropanolamin, Triisopropanolamin, Morpholin, N-Methylmorpholin, 2-Amino-2-methyl-1-propanol und Gemische derartiger Basen. Besonders bevorzugt sind Ammoniak und N,N-Dimethylethanolamin. Nicht grundsätzlich ungeeignet, jedoch weniger bevorzugt sind auch Alkalihydroxide wie beispielsweise Natrium- oder Kaliumhydroxid.

Im Anschluß an den Dispergierschritt kann gegebenenfalls eine (weitere) Reduzierung des Lösungsmittelgehalts durch Destillation erfolgen. Die Menge an Dispergierwasser, an eingesetztem Lösungsmittel und die Menge des abdestillierten Lösungsmittels werden so gewählt, daß letztendlich Dispersionen der urethanmodifizierten Polyesterharze a) mit einem Feststoffgehalt von 38 - 48 Gew.-%, vorzugsweise 42 - 48 Gew.-% resultieren, wobei der Gehalt dieser Dispersionen an organischen Lösungsmitteln unter 7 Gew.-% liegt. Der Begriff "Dispersion" soll im übrigen stets auch Lösungen umfassen, da der Übergang von Lösung zu Dispersion fließend ist und vor allem vom Grad der hydrophilen Modifizierung abhängt.

In den erfindungsgemäßen Bindemittelkombinationen liegen neben den urethanmodifizierten Polyesterharzen a) Vernetzerharze b) in der bereits oben angegebenen Menge vor.

Die Vernetzerharze b) können wasserverdünnbare bzw. -dispergierbare Substanzen darstellen, es ist jedoch auch möglich, als Vernetzerharze hydrophobe, für sich allein im Wasser nicht dispergierbare Substanzen einzusetzen, da die urethanmodifizierten Polyesterharze a) die Funktion eines Emulgators für die Vernetzerharze b) übernehmen können.

Geeignete Vernetzerharze b) sind beispielsweise wasserverdünnbare bzw. -dispergierbare Melamin- bzw. Harnstoff-Formaldehyd-Kondensationsprodukte, wie sie z.B. bei D. H. Solomon, The Chemistry of Organic Filmformers, S. 235 ff, John Wiley & Sons, Inc., New York, 1967 beschrieben sind. Die Melaminharze können jedoch auch ganz oder teilweis durch andere vernetzende Aminoplaste, wie sie z.B. in "Methoden der organischen Chemie" (Houben-Weyl), Bd. 14/2, Teil 2, 4. Auflage, Georg Thieme Verlag, Stuttgart 1963, S. 319 ff, beschrieben sind, ersetzt werden.

Ebenfalls geeignete Vernetzerharze sind blockierte Polyisocyanate, beispielsweise auf Basis von Isoporondiisocyanat, Hexamethylendiisocyanat, 1,4-Diisocyanatocyclohexan, Bis-(4-isocyanato-cyclohexyl)-methan, 1,3-Diisocyanatobenzol, 1,4-Diisocyanatobenzol, 2,4-Diisocyanato-1-methylbenzol, 1,3-Diisocyana-to-2-methylbenzol, 1,3-Bisisocyanatomethylbenzol, 2,4-Bisisocyanatomethyl-1,5-dimethylbenzol, Bis-(4-isocyanatophenyl)-propan, Tris-(4-isocyanatophenyl)-methan, Trimethyl-1,6-diisocyanatohexan oder auf Basis von Lackpolyisocyanaten wie Biuretgruppen aufweisenden Polyisocyanaten auf Basis von 1,6-Diisocyanatohexan, Isocyanuratgruppen aufweisenden Polyisocyanaten auf Basis von 1,6-Diisocyanatohexan oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebige Gemischen derartiger Polyhydroxylverbindungen andererseits. Geeignete Blockierungsmitel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Lactame wie $\varepsilon$-Caprolactam oder Phenole.

Bevorzugte Vernetzerharze sind Melamin- und Harnstoffharze, insbesondere alkylierte Melamin-Formaldehydharze mit 1 - 8 Kohlenstoffatomen in der Alkylkette wie z.B. butylierte und/oder methylierte oder methoxymethylierte Melaminharze.

In den erfindungsgemäßen Bindemittelkombinationen können gegebenenfalls als weitere Komponente Emulgatoren c) in den bereits oben genannten Mengen vorliegen. Geeignete Emulgatoren c) sind in Ullmann's Encyclopädie der technischen Chemie, 4. Auflage, Band 10, S. 449 - 473, Verlag Chemie, Weinheim 1975, beschrieben. Bevorzugte nichtionische Emulgatoren sind Verbindungen der Formeln

$$R^1\text{-}O\text{-}R^3_m\text{-}H \; ; \qquad R^2CO\text{-}O\text{-}R^4_n\text{-}H \; ,$$

wobei in diesen Formeln

| | |
|---|---|
| $R^1$ und $R^2$ | für gleiche oder verschiedene Reste stehen und aliphatische, cycloaliphatische, araliphatische, alkaromatische oder aromatische Kohlenwasserstoffreste mit 6 - 25 Kohlenstoffatomen bedeu-ten, |
| $R^3$ und $R^4$ | jeweils Alkylenoxideinheiten mit 2 - 4 Kohlenstoffatomen bedeuten, die zumindest zu 60 Gew.-%, vorzugsweise zu 100 Gew.-% aus Ethylenoxideinheiten bestehen. Besonders gut geeignet sind die an sich bekannten Ethoxylierungsprodukte von $C_8$-$C_{18}$-Alkylphenolen, die im Mittel mehr als 10 Ethylenoxideinheiten und vorzugsweise mindestens 20 Ethylenoxideinheiten pro Molekül aufweisen, bzw. deren Mischungen. |

Die erfindungsgemäßen Bindemittelkombinationen bzw. ihre wäßrigen Dispersionen können durch einfaches Abmischen der Einzelkomponenten a), b) und c) hergestellt werden.

Die erfindungsgemäßen Automobilfüller können neben den wäßrigen Bindemittelkombinationen die aus der Lacktechnologie üblichen Hilfs- und Zusatzmittel, wie z.B. Pigmente, Füllstoffe, Antiabsetzmittel, Verdicker, Verlaufshilfsmittel, Antischaummittel usw. enthalten. Einige dieser Zusatzmittel können eventuell auch schon während der Herstellung der wäßrigen Bindemittel dem Reaktionsansatz zugefügt werden, falls hierdurch das Herstellungsverfahren nicht gestört wird.

Gemäß einer bevorzugten Ausführungsform erfolgt die Herstellung eines wäßrigen Füllers nach dem erfindungsgemäßen Verfahren, wobei z.B. die erste und zweite Stufe in einem Eintopfverfahren durchgeführt werden kann.

Die erfindungsgemäßen Bindemittelkombinationen enthaltenden wäßrigen Einbrennfüller stellen hochwertige, wäßrige Lacke für die Beschichtung von Kraftfahrzeugteilen dar. Sie können durch an sich bekannte Methoden wie beispielsweise Spritzen, Fluten, Tauchen aufgebracht werden.

Die Lacke härten bei Temperaturen > 120° C zu klaren, vernetzten Überzügen.

In den nachfolgenden Beispielen beziehen sich alle Prozentangaben auf Gewichtsprozente.

Beispiel 1

In ein 15 l-Reaktionsgefäß mit Rühr-, Kühl- und Heizvorrichtung werden $a_{1,1}$) 468 g (3,5 %) Isononansäure, $a_{1,2}$) 2.931 g (21,7 %) Adipinsäure, $a_{1,3}$) 3.330 g (24,7 %) Isophthalsäure, $a_{1,4}$) 2.853 g (21,1 %) 1,6-Hexandiol und 1.602 g (11,9 %) 1,4-Cyclohexandimethanol und $a_{1,5}$) 2,316 g (17,1 %) Trimethylolpropan eingewogen und unter $N_2$-Durchleiten in einer Stunde auf 140° C aufgeheizt. Dann wird in 3 Stunden auf 150° C und dann in 7 Stunden auf 220° C aufgeheizt und gehalten, bis die Säurezahl 2,6 ist. Dann wird auf 100° C abgekühlt. Die Hydroxylzahl des so hergestellten Polyesterpolyols $a_1$) liegt bei 178.

7.000 g (73,6 %) des Polyesterpolyols $a_1$), 593 g (6,2 %) Dimethylolpropionsäure [$a_2$)], 1.421 g N-Methylpyrrolidon und 23,8 g (0,25 %) ZinnII-octoat (Reaktionsbeschleuniger), werden unter $N_2$-Atmosphäre auf 120° C aufgeheizt und 30 Minuten homogenisiert, nach dem Homogenisieren wird auf 70° C abgekühlt und unter kräftigem Rühren 1.917 g (20,2 %) Isophorondiisocyanat [$a_3$)] auf einmal zugegeben. Dann wird 1 Stunde bei 100° C gehalten, in 1 Stunde auf 130° C aufgeheizt und bei 130° C gehalten, bis der NCO-Gehalt < 0,1 % ist. Die so erhaltene Lösung des urethanmodifizierten Polyesterharzes (10.954 g) wird dann in einer Lösung von 275 g N,N-Dimethylethanolamin in 10.146 g Wasser dispergiert. Auf diese Weise resultiert eine wäßrige Dispersion eines urethanmodifizierten Polyesterharzes a) mit einem Feststoffgehalt von 44,6 %. Die Säurezahl des dispergierten Feststoffs liegt bei 29,8. Der Gehalt der Dispersion an Lösungsmittel liegt bei 6,6 %. Der Neutralisationsgrad, bezogen auf die eingesetzte Dimethylolpropionsäure, liegt bei 70 %.

## Beispiel 2

In einem 10 l-Reaktionsgefäß mit Rühr-, Kühl- und Heizvorrichtung werden $a_{1,1}$) 365 g (8,1 %) Isononansäure, $a_{1,2}$) 895 g (20,0 %) Adipinsäure, $a_{1,3}$) 1.017 g (22,7 %) Isophthalsäure, $a_{1,4}$) 761 g (17,0 %) 1,6-Hexandiol, 674 g (15,0 %) 1,4-Cyclohexandimethanol und $a_{1,5}$) 771 g (17,2 %) Trimethylolpropan eingewogen und wie in Beispiel 1 beschrieben zu einem Polyester mit Säurezahl 2,9 und OH-Zahl 172 umgesetzt. Die Ausbeute beträgt 4.000 g.

Zu diesen 4.000 g (73,5 %) des Polyesters gibt man 334 g (6,1 %) Dimethylolpropionsäure $a_2$), 13,7 g (0,25 %) ZinnII-octoat, 810 g N-Methylpyrrolidon und 2.806 g Butylacetat, erhitzt unter $N_2$-Atmosphäre auf 60° C und homogenisiert. 1.106 g (20,4 %) Isophorondiisocyanat $a_3$) werden in 30 Minuten zudosiert und die Reaktionsmischung unter Ausnutzung der exothermen Reaktion auf 110° C erwärmt. Die Reaktionsmischung wird solange bei 110° C gerührt, bis keine NCO-Gruppen mehr nachweisbar sind, anschließend wird das Butylacetat durch Anlegen eines leichten Vakuums (10 - 100 mbar) abdestilliert und die so erhaltene 87 %ige Harzlösung in einer Lösung von 155 g N,N-Dimethylethanolamin in 5.700 g Wasser dispergiert. Es resultiert auf diese Weise eine wäßrige Dispersion eines urethanmodifizierten Polyesterharzes a) mit einem Feststoffgehalt von 45 %. Die Säurezahl des dispergierten Polyesterharzes liegt bei 28,6. Die Dispersion enthält 6,7 % Lösungsmittel. Der Neutralisationsgrad, bezogen auf die eingesetzte Dimethylolpropionsäure, liegt bei 70 %.

## Beispiel 3

In einem 5 l-Reaktionsgefäß mit Rühr-, Kühl- und Heizvorrichtung werden $a_{1,1}$) 244 g (6,1 %) Sojaölfettsäure, $a_{1,2}$) 944 g (23,5 %) Adipinsäure, $a_{1,3}$) 784 g (19,5 %) Isophthalsäure und 132 g (3,3 %) Hexahydrophthalsäureanhydrid, $a_{1,4}$) 1.000 g (24,9 %) 1,6-Hexandiol und 228 g (5,7 %) 1,4-Cyclohexandiol und $a_{1,5}$) 680 g (17,0 %) Trimethylolpropan eingewogen und wie in Beispiel 1 beschrieben zu einem Polyesterpolyol $a_1$) mit einer Hydroxylzahl von 177 und einer Säurezahl von 1,9 umgesetzt.

3.060 g (73,5 %) dieses Polyesters und 261 g (6,3 %) Dimethylolpropionsäure werden in 6.000 g Aceton bei 50° C gelöst. Dann wird eine Mischung aus 4,5 g (0,1 %) ZinnII-octoat und 840 g (20,2 %) Isophorondiisocyanat in 30 Minuten zudosiert. Die Reaktionsmischung wird solange unter Rückfluß gerührt, bis kein NCO-Gehalt mehr nachweisbar ist. Anschließend werden 110 g N,N-Dimethylethanolamin und 4.700 g Wasser zugegeben und das Aceton durch verstärktes Inertgasdurchleiten bei Temperaturen von 60 - 100° C abdestilliert.

Man erhält eine lösungsmittelfreie Bindemitteldispersion mit einem Festgehalt von 45,5 % und einer Säurezahl von 28,5 (für das 100 %ige Bindemittel).

Aus den in Beispielen 1 - 3 beschriebenen Dispersionen von urethanmodifizierten Polyesterharzen a) werden jeweils gebrauchsfertige Einbrennfüller hergestellt. Hierzu werden jeweils solche Mengen der Dispersionen verwendet, die 88 Gew.-Teilen dispergiertem Feststoff entsprechen. Diese Dispersionen werden mit 12 Gew.-Teilen (berechnet als 100 %ige Festsubstanz) eines handelsüblichen Melaminharzes (®Maprenal MF 904 der Firma Hoechst AG), sowie 80 Gew.-Teilen Pigmenten, bestehend aus 53 Gew.-Teilen Titandioxid, 2 Gew.-Teilen Eisenoxid-Schwarz, 20 Gew.-Teilen mikrofeiner Schwerspat und 5 Gew.-Teilen Mikrotalkum, 0,5 Gew.-Teilen eines handelsüblichen Verlaufsmittels (®Additol XW 395 der Firma Hoechst AG) und 0,25 Gew.-Teile eines handelsüblichen Entschäumers (Entschäumer DNE der Firma Bayer AG) mittels einer Perlmühle zu einem Einbrennfüller angerieben.

Die so hergestellten Einbrennfüller werden auf mit einer KTL-Grundierung versehene Stahlbleche mittels einer Spritzpistole aufgetragen und nach 10 minütigem Ablüften bei Raumtemperatur während 20 Minuten bei 150 - 160° C zu einer Füllerschicht der Trockenfilmstärke ca. 40 µm eingebrannt. Anschließend wird mit einem Decklack auf Alkydharz-Melamin-Basis überlackiert (Klarlack, Trockenfilmstärke ca.40 µm). Nach Einbrennen des Decklacks während 20 min. bei 150° C weisen die erhaltenen Beschichtungen folgende Eigenschaften auf:

| Beispiel | 1 | 2 | 3 |
|---|---|---|---|
| Pendelhärte (sec) DIN 53 157 | 85 | 113 | 145 |
| Erichsentiefung (mm) DIN 53 156 | 10 | >10 | 9 |
| Glanz nach Gardner (%) (60° Winkel) | 83 | 82 | 83 |
| Steinschlagtest [1] | 1-2 | 1 | 1 |
| Decklackhaftung [2] | 1 | 1-2 | 1-2 |

[1] DIN 53 230, Werte von 1 - 6

1 = sehr guter Haftverbund,

6 = sehr schlechter Haftverbund.

[2] in Anlehnung an DIN 53 157, Werte von 1 - 3

1 = sehr gute Haftung

3 = schlechte Haftung

Außerdem werden die genannten Einbrennfüller auf entfettete jedoch nicht grundierte Stahlbleche appliziert und während 20 min bei 165° C zu einer Füllerschicht der Trockenfilmstärke 40 µm eingebrannt. Der Salzsprühtest (180 Stunden) nach DIN 53 167 an der mit einem Schnitt versehenen Füllerschicht ergibt folgende Ergebnisse für die Unterwanderung:

| Beispiel | 1 | 2 | 3 |
|---|---|---|---|
| Salzsprühtest (mm) DIN 53 167 | 8 | 3 | 8 |

Die Füllerbindemittel sind bei Raumtemperatur ohne Eigenschaftverlust mindestens 1 Jahr lagerstabil.

## Patentansprüche

1. In Wasser dispergierbare Bindemittelkombination zur Herstellung eines aus wäßriger Phase zu verarbeitenden Einbrennfüllers, bestehend aus
   a) 65 - 95 Gew.-% eines Carboxylatgruppen enthaltenden, urethanmodifizierten Polyesterharzes,
   b) 5-35 Gew.-% Aminoplastharz und/oder blockiertes Polyisocyanat als Vernetzerharz,
   c) 0 - 2 Gew.-% eines Emulgators,

8

dadurch gekennzeichnet, daß die Komponente a) eine Säurezahl von 15 - 36, eine Hydroxylzahl von mindestens 40 und ein Molekulargewicht $M_w$ von 5.000 - 50,000 aufweist und durch Umsetzung von

$a_1$) 72 - 80 Gew.-% eines Polyesterpolyols mit einer Hydroxylzahl von 130 - 200 und einer Säurezahl von 1-5, welches durch Umsetzung von

$a_{1,1}$) 2 - 11 Gew.-% einer Monocarbonsäure-Komponente, bestehend aus mindestens einer aliphatischen Monocarbonsäure des Molekulargewichtsbereichs 122 - 340,

$a_{1,2}$) 17 - 27 Gew.-% einer Dicarbonsäure-Komponente, bestehend aus mindestens einer aliphatischen Dicarbonsäure des Molekulargewichtsbereichs 116 - 600,

$a_{1,3}$) 20 - 30 Gew.-% einer Säure- bzw. Anhydrid-Komponente, bestehend aus mindestens einer aromatischen oder cycloaliphatischen Dicarbonsäure des Molekulargewichtsbereichs 166 - 172 und/ oder mindestens einem Anhydrid einer derartigen Säure,

$a_{1,4}$) 27 - 41 Gew.-% einer Diol-Komponente, bestehend aus mindestens einem (cyclo)aliphatischen Diol des Molekulargewichtsbereichs 62 - 400 mit der Maßgabe, daß mindestens 50 Gew.-% dieser Komponente diprimäre Diole mit 5 - 8 Kohlenstoffatomen darstellen, und

$a_{1,5}$) 13 - 21 Gewicht-% einer Polyol-Komponente, bestehend aus mindestens einem drei- oder vierwertigen Alkohol des Molekulargewichtsbereichs 92 - 300

hergestellt worden ist, und

$a_2$) 4 - 7 Gew.-% einer 2,2-Bis(hydroxymethyl)alkancarbonsäure oder einer dieser Säuremenge entsprechenden Menge eines t-Aminsalzes einer solchen Säure mit

$a_3$) 15 - 24 Gew.-% einer Diisocyanat-Komponente, bestehend aus mindestens einem cycloaliphatischen Diisocyanat des Molekulargewichtsbereichs 166 - 294 und gegebenenfalls anschließende Neutralisation zumindest eines Teils der in dem Umsetzungsprodukt vorliegenden Carboxylgruppen mit Ammoniak oder einem organischen Amin hergestellt worden ist, wobei sich die Prozentsätze bezüglich der Komponenten a) bis c), bezüglich der Komponenten $a_1$) bis $a_3$) und bezüglich der Komponenten $a_{1,1}$) bis $a_{1,5}$) jeweils zu 100 ergänzen.

2. Bindemittelkombination gemäß Anspruch 1, bestehend aus

a) 75 - 90 Gew.-% eines Carboxylatgruppen enthaltenden urethanmodifizierten Polyesterharzes,

b) 10 - 25 Gew,-% eines Vernetzerharzes und

c) 0 - 1 Gew.-% eines Emulgators,

dadurch gekennzeichnet, daß die Komponente a) eine Säurezahl von 20 - 29,9, eine Hydroxylzahl von mindestens 40 und ein Molekulargewicht $M_w$ von 7.500 - 30.000 aufweist und durch Umsetzung von

$a_1$) 73 - 77 Gew.-% eines Polyesterpolyols mit einer Hydroxylzahl von 145 - 180 und einer Säurezahl von 1 - 3,5 auf Basis der in Anspruch 1 genannten Ausgangskomponenten $a_{1,1}$) bis $a_{1,5}$) und

$a_2$) 5 - 6,5 Gew.-% Dimethylolpropionsäure oder einer dieser Säuremenge entsprechenden Menge eines t-Aminsalzes der Dimethylolpropionsäure mit

$a_3$) 17 - 22 Gew.-% mindestens eines cycloaliphatischen Diisocyanats des Molekulargewichtsbereichs 222 - 294

und gegebenenfalls anschließend erfolgender zumindest teilweiser Neutralisation von in dem Umsetzungsprodukt vorliegenden Carboxylgruppen hergestellt worden ist, wobei sich die Prozentsätze bezüglich der Komponenten a) bis c) und bezüglich der Komponenten $a_1$) bis $a_3$) jeweils zu 100 ergänzen.

3. Bindemittelkombinationen gemäß Anspruch 1 und 2, dadurch gekennzeichnet, daß der Emulgator c) aus mindestens einem ethoxylierten $C_8$-$C_{18}$-Alkylphenol mit mindestens 10 Ethylenoxideinheiten pro Molekül besteht.

4. Verfahren zur Herstellung eines wäßrigen Einbrennfüllers zur Herstellung von steinschlagfesten Beschichtungen, dadurch gekennzeichnet, daß man in einer ersten Stufe ein Polyesterpolyol $a_1$) mit einer Hydroxylzahl von 130 - 200 und einer Säurezahl von 1 - 5 durch an sich bekannte Umsetzung von

$a_{1,1}$) 2 - 11 Gew.-% einer Monocarbonsäure-Komponente, bestehend aus mindestens einer aliphatischen Monocarbonsäure des Molekulargewichtsbereichs 122 - 340,

$a_{1,2}$) 17 - 27 Gew.-% einer Dicarbonsäure-Komponente, bestehend aus mindestens einer aliphatischen Dicarbonsäure des Molekulargewichtsbereichs 116 - 600,

$a_{1,3}$) 20 - 30 Gew.-% einer Säure- bzw. Anhydrid-Komponente, bestehend aus mindestens einer aromatischen oder cycloaliphatischen Dicarbonsäure des Molekulargewichtsbereichs 166 bis 172 und/ oder mindestens einem Anhydrid einer derartigen Säure,

$a_{1,4}$) 27 - 41 Gew.-% einer Diol-Komponente, bestehend aus mindestens einem (cyclo)aliphatischen Diol des Molekulargewichtsbereichs 62 - 400, mit der Maßgabe, daß mindestens 50 Gew.-%- dieser

9

Komponente aus einem diprimären Diol mit 5 - 8 Kohlenstoffatomen besteht,

$a_{1,5}$) 13 - 21 Gew.-% einer Polyol-Komponente, bestehend aus mindestens einem drei- oder vierwertigen Alkohol des Molekulargewichtsbereichs 92 - 300

herstellt, wobei sich die genannten Prozentsätze zu 100 ergänzen, und anschließend

in einer zweiten Stufe 72 - 80 Gew.-% des Polyesters $a_1$) mit $a_2$) 4 - 7 Gew.-% einer 2,2-Bis-(hydroxymethyl) alkancarbonsäure oder einer dieser Säuremenge entsprechenden Menge eines t-Aminsalzes einer derartigen Säure und $a_3$) 15 - 24 Gew.-% eines cycloaliphatischen Diisocyanats des Molekulargewichtsbereichs 166 - 294 in Gegenwart eines inerten Lösungsmittels bei 50 -140° C zu einem in organischer Lösung vorliegenden, urethanmodifizierten Polyesterharz a) des Molekulargewichtsbereichs $M_w$ 5.000 - 50.000, einer Säurezahl von 15 - 36 und einer Hydroxylzahl von mindestens 40 umsetzt, wobei sich auch hier die Prozentsätze zu 100 ergänzen, und anschließend

in einer dritten Stufe, gegebenenfalls nach Zugabe von Emulgatoren c) unter Einhaltung eines Gewichtsverhältnisses von urethanmodifiziertem Polyesterharz a) zu Emulgator c) von 65 : 2 bis 95 : 0 die organische Lösung mit Wasser vermischt, die Vernetzerharz-Kom ponente b) unter Einhaltung eines Gewichtsverhältnisses der Komponenten a) und b) von 65 : 35 bis 95 : 5 und gegebenenfalls weiterer Hilfs- und Zusatzmittel zusetzt, wobei die in der Komponente a) gegebenenfalls noch vorliegenden Carboxylgruppen vor, während oder im Anschluß an die Durchführung der dritten Stufe gegebenenfalls mit Ammoniak oder einem Amin zumindest teilweise in Carboxylatgruppe überführt werden.

5. Verfahren gemäß Anspruch 4, dadurch gekennzeichnet, daß das organische Lösungsmittel vor, während oder nach der Vermischung mit dem Wasser ganz oder teilweise destillativ entfernt wird.

6. Verwendung der gemäß Anspruch 4 und 5 erhaltenen wäßrigen Einbrennfüller zur Herstellung von steinschlagfesten Überzügen auf Kraftfahrzeugen oder Kraftfahrzeugteilen.

## Claims

1. Water-dispersible binder combinations for the production of a stoving filler to be processed from aqueous phase, consisting of

    a) 65 to 95% by weight of a urethane-modified polyester resin containing carboxylate groups,

    b) 5 to 35% by weight of an amino resin and/or blocked polyisocyanate as crosslinker resin and

    c) 0 to 2% by weight of an emulsifier,

    characterized in that component a) has an acid value of 15 to 36, a hydroxyl value of at least 40 and a molecular weight $M_w$ of 5,000 to 50,000 and has been obtained by reaction of

    $a_1$) 72 to 80% by weight of a polyester polyol having a hydroxyl value of 130 to 200 and an acid value of 1 to 5 obtained by reaction of

    $a_{1.1}$) 2 to 11% by weight of a monocarboxylic acid component consisting of at least one aliphatic monocarboxylic acid having a molecular weight in the range from 122 to 340,

    $a_{1.2}$) 17 to 27% by weight of a dicarboxylic acid component consisting of at least one aliphatic dicarboxylic acid having a molecular weight in the range from 116 to 600,

    $a_{1.3}$) 20 to 30% by weight of an acid or anhyride component consisting of at least one aromatic or cycloaliphatic dicarboxylic acid having a molecular weight in the range from 166 to 172 and/or at least one anhydride of such an acid,

    $a_{1.4}$) 27 to 41% by weight of a diol component consisting of at least one (cyclo)aliphatic diol having a molecular weight in the range from 62 to 400, with the proviso that at least 50% by weight of this component consists of a diprimary diol containing 5 to 8 carbon atoms, and

    $a_{1.5}$) 13 to 21% by weight of a polyol component consisting of at least one trihydric or tetrahydric alcohol having a molecular weight in the range from 92 to 300

    and

    $a_2$) 4 to 7% by weight of a 2,2-bis-(hydroxymethyl)-alkane carboxylic acid or a quantity - corresponding to this quantity of acid - of a t-amine salt of such an acid with

    $a_3$) 15 to 24% by weight of a diisocyanate component consisting of at least one cycloaliphatic diisocyanate having a molecular weight in the range from 166 to 294,

    optionally followed by at least partial neutralization of the carboxyl groups in the reaction product with ammonia or an organic amine, the percentages in regard to components a) to c), in regard to components $a_1$) to $a_3$) and in regard to components $a_{1.1}$) to $a_{1.5}$) adding up to 100 in each case.

2. Binder combinations as claimed in claim 1, consisting of
   a) 75 to 90% by weight of a urethane-modified polyester resin containing carboxylate groups,
   b) 10 to 25% by weight of a crosslinker resin and
   c) 0 to 1% by weight of an emulsifier,
characterized in that component a) has an acid value of 20 to 29.9, a hydroxyl value of at least 40 and a molecular weight $M_w$ of 7,500 to 30,000 and has been obtained by reaction of
   $a_1$) 73 to 77% by weight of a polyester polyol having a hydroxyl value of 145 to 180 and an acid value of 1 to 3.5 based on starting components $a_{1.1}$) to $a_{1.5}$) mentioned in claim 1 and
   $a_2$) 5 to 6.5% by weight dimethylol propionic acid or a quantity - corresponding to this quantity of acid - of a t-amine salt of dimethylol propionic acid with
   $a_3$) 17 to 22% by weight of at least one cycloaliphatic diisocyanate having a molecular weight in the range from 222 to 294,
optionally followed by at least partial neutralization of carboxyl groups present in the reaction product, the percentages in regard to components a) to c) and in regard to components $a_1$) to $a_3$) adding up to 100 in either case.

3. Binder combinations as claimed in claims 1 and 2, characterized in that the emulsifier c) consists of at least one ethoxylated $C_{8-18}$ alkylphenol containing at least 10 ethylene oxide units per molecule.

4. A process for the production of an aqueous stoving filler for the production of non-chip coatings, characterized in that,
in a first step, a polyester polyol $a_1$) having a hydroxyl value of 130 to 200 and an acid value of 1 to 5 is prepared in known manner by reaction of
   $a_{1.1}$) 2 to 11% by weight of a monocarboxylic acid component consisting of at least one aliphatic monocarboxylic acid having a molecular weight in the range from 122 to 340,
   $a_{1.2}$) 17 to 27% by weight of a dicarboxylic acid component consisting of at least one aliphatic dicarboxylic acid having a molecular weight in the range from 116 to 600,
   $a_{1.3}$) 20 to 30% by weight of an acid or anhyride component consisting of at least one aromatic or cycloaliphatic dicarboxylic acid having a molecular weight in the range from 166 to 172 and/or at least one anhydride of such an acid,
   $a_{1.4}$) 27 to 41% by weight of a diol component consisting of at least one (cyclo)aliphatic diol having a molecular weight in the range from 62 to 400, with the proviso that at least 50% by weight of this component consists of a diprimary diol containing 5 to 8 carbon atoms, and
   $a_{1.5}$) 13 to 21% by weight of a polyol component consisting of at least one trihydric or tetrahydric alcohol having a molecular weight in the range from 92 to 300,
the above percentages adding up to 100,
and, in a second step, 72 to 80% by weight of the polyester $a_1$) are reacted with $a_2$) 4 to 7% by weight of a 2,2-bis(hydroxymethyl)-alkane carboxylic acid or with a quantity - corresponding to this quantity of acid - of a t-amine salt of such an acid and $a_3$) 15 to 24% by weight of a cycloaliphatic diisocyanate having a molecular weight in the range from 166 to 294 in the presence of an inert solvent at 50 to 140°C to form a urethane-modified polyester resin a) present in organic solution having a molecular weight $M_w$ in the range from 5,000 to 50,000, an acid value of 15 to 36 and a hydroxyl value of at least 40, the percentages again adding up to 100, and
in a third step, optionally after addition of emulsifiers c) in such a quantity that a ratio by weight of urethane-modified polyester resin a) to emulsifier c) of 65:2 to 95:0 is maintained, the organic solution is mixed with water, the crosslinker resin component b) is added so that a ratio by weight of components a) and b) of 65:35 to 95:5 is maintained and further auxiliaries and additives are optionally introduced, any carboxyl groups still present in component a) optionally being converted at least partly into carboxylate groups with ammonia or an amine after the third step has been completed.

5. A process as claimed in claim 4, characterized in that the organic solvent is completely or partly removed by distillation before, during or after mixing with the water.

6. The use of the aqueous stoving fillers obtained by the process claimed in claims 4 and 5 for the production of non-chip coatings on motor vehicles or parts of motor vehicles.

**Revendications**

1. Combinaison de liants apte à être dispersée dans l'eau pour la préparation d'un apprêt à cuire qui doit être traité à partir de la phase aqueuse, constituée par

a) 65 à 95% en poids d'une résine polyester modifiée par de l'uréthanne, contenant des groupes carboxylate,

b) 5 à 35% en poids d'une résine aminoplaste et/ou d'un polyisocyanate bloqué, à titre de résine de réticulation,

c) 0 à 2% en poids d'un émulsionnant,

caractérisée en ce que le composant a) présente un indice d'acide de 15 - 36, un indice hydroxyle d'au moins 40 et un poids moléculaire $M_w$ de 5.000 - 50.000, et que l'on prépare par la mise en réaction

$a_1$) de 72 - 80% en poids d'un polyesterpolyol ayant un indice hydroxyle de 130 - 200 et un indice d'acide de 1 - 5, que l'on prépare par la mise en réaction

$a_{1,1}$) de 2 - 11% en poids d'un composant d'acide monocarboxylique, constitué d'au moins un acide monocarboxylique aliphatique dans le domaine du poids moléculaire de 122 - 340,

$a_{1,2}$) de 17 - 27% en poids d'un composant d'acide dicarboxylique, constitué d'au moins un acide dicarboxylique aliphatique dans le domaine du poids moléculaire de 116 - 600,

$a_{1,3}$) de 20 - 30% en poids d'un composant d'acide ou d'anhydride, constitué par au moins un acide dicarboxylique aromatique ou cycloaliphatique dans le domaine du poids moléculaire de 166 - 172 et/ou par au moins un anhydride d'un acide de ce type,

$a_{1,4}$) de 27 - 41% en poids d'un composant de diol, constitué d'au moins un diol (cyclo)aliphatique dans le domaine du poids moléculaire de 62 - 400, avec la mesure qu'au moins 50% en poids de ce composant représente des diols diprimaires contenant de 5 à 8 atomes de carbone, et

$a_{1,5}$) de 13 - 21% en poids d'un composant de polyol constitué d'au moins un alcool tri- ou tétravalent dans le domaine du poids moléculaire de 92 - 300,

et

$a_2$) de 4 - 7% en poids d'un acide 2,2-bis-(hydroxyméthyl)alcanecarboxylique ou d'une quantité correspondant à cette quantité d'acide d'un sel aminique tertiaire d'un tel acide avec

$a_3$) de 15 - 24% en poids d'un composant de diisocyanate constitué d'au moins un diisocyanate cycloaliphatique dans le domaine du poids moléculaire de 166 - 294

et éventuellement par la neutralisation ultérieure d'au moins une partie des groupes carboxyle présents dans le produit réactionnel avec de l'ammoniac ou une amine organique, les pourcentages se rapportant aux composants a) à c), se rapportant aux composants $a_1$) à $a_3$) et se rapportant aux composants $a_{1,1}$) à $a_{1,5}$) se complétant chaque fois pour obtenir 100.

2. Combinaison de liants selon la revendication 1, constituée par

a) 75 - 90% en poids d'une résine polyester modifiée par de l'uréthanne, contenant des groupes carboxylate,

b) 10 - 25% en poids d'une résine de réticulation et

c) 0 - 1% en poids d'un émulsionnant,

caractérisée en ce que le composant a) présente un indice d'acide de 20 - 29,9, un indice hydroxyle d'au moins 40 et un poids moléculaire $M_w$ de 7.500 - 30.000, et que l'on prépare par la mise en réaction de

$a_1$) 73 - 77% en poids d'un polyesterpolyol ayant un indice hydroxyle de 145 - 180 et un indice d'acide de 1 - 3,5, à base des composants de départ $a_{1,1}$) à $a_{1,5}$) mentionnés dans la revendication 1 et

$a_2$) 5 - 6,5% en poids d'acide diméthylolpropionique ou d'une quantité correspondant à cette quantité d'acide d'un sel aminique tertiaire de l'acide diméthylolpropionique, avec

$a_3$) 17 - 22% en poids d'au moins un diisocyanate cycloaliphatique dans le domaine du poids moléculaire de 222 - 294

et éventuellement par la neutralisation, celle-ci ayant lieu ultérieurement, au moins partielle des groupes carboxyle présents dans le produit réactionnel, les pourcentages concernant les composants a) à c) et concernant les composants $a_1$) à $a_3$) se complétant chaque fois pour obtenir 100.

3. Combinaisons de liants selon les revendications 1 et 2, caractérisées en ce que l'émulsionnant c) est constitué d'au moins un alkyl(en $C_8$-$C_{18}$)phénol éthoxylé contenant au moins 10 unités d'oxyde d'éthylène par molécule.

4. Procédé pour la préparation d'un apprêt aqueux à cuire pour la préparation d'enductions d'antigravillonnage, caractérisé en ce que, dans une première étape, on prépare un polyesterpolyol $a_1$) ayant un indice

hydroxyle de 130 - 200 et un indice d'acide de 1 - 5 par la mise en réaction connue en soi

$a_{1,1}$) de 2 - 11% en poids d'un composant d'acide monocarboxylique, constitué d'au moins un acide monocarboxylique aliphatique dans le domaine du poids moléculaire de 122 - 340,

$a_{1,2}$) de 17 - 27% en poids d'un composant d'acide dicarboxylique, constitué d'au moins un acide dicarboxylique aliphatique dans le domaine du poids moléculaire de 116 - 600,

$a_{1,3}$) de 20 - 30% en poids d'un composant d'acide ou d'anhydride, constitué par au moins un acide dicarboxylique aromatique ou cycloaliphatique dans le domaine du poids moléculaire de 166 - 172 et/ou par au moins un anhydride d'un acide de ce type,

$a_{1,4}$) de 27 - 41% en poids d'un composant de diol, constitué d'au moins un diol (cyclo)aliphatique dans le domaine du poids moléculaire de 62 - 400, avec la mesure qu'au moins 50% en poids de ce composant représente un diol diprimaire contenant de 5 à 8 atomes de carbone, et

$a_{1,5}$) de 13 - 21% en poids d'un composant de polyol constitué d'au moins un alcool tri- ou tétravalent dans le domaine du poids moléculaire de 92 - 300,

les pourcentages mentionnés se complétant pour obtenir 100, et ensuite,

dans une deuxième étape, en faisant réagir 72 - 80% en poids du polyester $a_1$) avec $a_2$) 4 - 7% en poids d'un acide 2,2-bis-(hydroxyméthyl)alcanecarboxylique ou d'une quantité correspondant à cette quantité d'acide d'un sel aminique tertiaire d'un acide de ce type et $a_3$) 15 - 24% en poids d'un diisocyanate cycloaliphatique dans le domaine du poids moléculaire de 166 - 294 en présence d'un solvant inerte à 50 - 140°C pour obtenir une résine polyester a) modifiée par de l'uréthanne, présente sous forme de solution organique, dans le domaine du poids moléculaire $M_w$ de 5.000 - 50.000, ayant un indice d'acide de 15 - 36 et un indice hydroxyle d'au moins 40, les pourcentages se complétant également en l'occurrence pour obtenir 100, et ensuite,

dans une troisième étape, éventuellement après addition d'émulsionnants c), tout en maintenant un rapport pondéral entre la résine polyester a) modifiée par de l'uréthanne et l'émulsionnant c), de 65 : 2 à 95 : 0, on mélange la solution organique avec de l'eau, on ajoute le composant b) de résine de réticulation, tout en maintenant un rapport pondéral entre les composants a) et b) de 65 : 35 à 95 : 5 et éventuellement d'autres agents auxiliaires et additifs, les groupes carboxyle éventuellement encore présents dans le composant a) étant transformés avant, pendant ou suite à la mise en oeuvre de la troisième étape, au moins partiellement en groupes carboxylate éventuellement avec de l'ammoniac ou une amine.

5. Procédé selon la revendication 4, caractérisé en ce qu'on élimine par distillation, complètement ou partiellement, le solvant organique avant, pendant ou après le mélange avec l'eau.

6. Utilisation des apprêts aqueux à cuire obtenus conformément aux revendications 4 et 5 pour la préparation de revêtements d'antigravillonnage sur des véhicules automobiles ou sur des accessoires de véhicules automobiles.